# EUROPÄISCHE PATENTSCHRIFT

(11) **EP 3 387 403 B1**
(45) Veröffentlichungstag und Bekanntmachung des Hinweises auf die Patenterteilung: **14.12.2022**
(21) Anmeldenummer: 16793852.1
(22) Anmeldetag: 08.11.2016
(51) Int. Cl.: F16C 32/06, G01M 1/04, G01M 1/16, G01M 1/22, G01M 17/02, G01L 5/16, G01L 5/20

(54) **RADKRAFTDYNAMOMETER ZUR MESSUNG VON REIFENKRÄFTEN**
WHEEL-FORCE DYNAMOMETER FOR MEASURING TYRE FORCES
DYNAMOMÈTRE DE FORCE DE ROUE POUR LA MESURE DES FORCES EXERCÉES SUR LES PNEUS

(30) Priorität: 08.12.2015 DE 102015224636
(43) Veröffentlichungstag der Anmeldung: 17.10.2018
(73) Patentinhaber: ZF Friedrichshafen AG, 88046 Friedrichshafen (DE)
(72) Erfinder: EISENBEISS, Jens, 94081 Fuerstenzell (DE); BÖSL, Roland, 94034 Passau (DE)
(74) Vertreter: ZF Friedrichshafen AG
(86) Internationale Anmeldenummer: PCT/EP2016/076898
(87) Internationale Veröffentlichungsnummer: WO 2017/097515

(56) Entgegenhaltungen:
- EP-A1- 0 192 789
- EP-A2- 1 239 275
- WO-A1-2015/146735
- CH-A- 500 480
- DE-B4- 10 260 000
- US-A- 3 948 095

## Beschreibung

Die Erfindung betrifft ein Radkraftdynamometer nach dem Oberbegriff des Patentanspruches 1.

Durch die DE 102 60 000 B4 der Anmelderin wurde ein Radkraftdynamometer zum Messen von Reifenkräften bekannt, wobei ein Fahrzeugrad an einer Radachse befestigt ist, welche über Wälzlager in einer Hohlwelle gelagert ist. Die Hohlwelle ist hydrostatisch in einem gestellfesten Gehäuse gelagert und weist einen Bund auf, in welchem Kraftsensoren zur Messung der Kräfte und Momente angeordnet sind. Die auf das Rad wirkenden Kräfte werden somit über die Radachse auf die Hohlwelle übertragen, die ihrerseits reibungsfrei mittels Hydrostatik in dem Gehäuse "schwimmt". Bei der Messung von Reifenkräften mittels eines Radkraftdynamometers können Messfehler auftreten, welche durch die Bauart der Messvorrichtung und deren Schwingungsverhalten bedingt sind.

Aus der EP 1 239 275 A2 ist eine Vorrichtung zur Messung der Gleichförmigkeit eines Reifens bekannt, wobei die Vorrichtung eine Welle, eine Reifenbefestigungseinrichtung, ein Wellengehäuse und eine Sensoreinrichtung zum Erfassen einer Kraft, die durch die Drehbewegung des Reifens erzeugt wird, umfasst. Das Wellengehäuse ist starr gelagert ist, wobei im Wellengehäuse ein radiales zylindrisches Lager zum drehbaren Lagern der Welle vorgesehen ist.

Die US 3 948 095 A beschreibt eine Reifentestmaschine, umfassend ein um eine erste Achse drehbares Lastrad, eine starre Spindel, welche um eine zweite Achse parallel zur ersten Achse drehbar ist und Mittel zum Montieren eines Reifens. Die Spindel wird über ein Fluidfilmlager von einem Lagergehäuse gehalten.

Aus der CH 500 480 A ist ein Auswuchtgerät zur Feststellung der Unwucht an einem auf einer Felge montierten Pneu bekannt, bei welchem die Felge mit dem Pneu auf einem Kopf mit einem hydrostatischen Lager zentriert wird.

Eine Aufgabe der Erfindung besteht darin, Messfehler bei einem Radkraftdynamometer der eingangs genannten Art zu vermeiden oder zu reduzieren.

Die Erfindung umfasst die Merkmale des Patentanspruches 1. Vorteilhafte Ausgestaltungen ergeben sich aus den Unteransprüchen.

Erfindungsgemäß ist vorgesehen, dass die Radachse, an welcher das Fahrzeugrad befestigt ist, als Hohlwelle ausgebildet ist, welche auf einem biegesteifen, ortsfest angeordneten Lagerzapfen gelagert ist. Dadurch, dass die Radachse nicht mehr - wie beim Stand der Technik - massiv ausgebildet und innerhalb einer Hohlwelle gelagert, sondern erfindungsgemäß selbst als Hohlwelle ausgebildet ist, wird aufgrund des vergrößerten Durchmessers und des Kreisringquerschnittes ein maximales Widerstandsmoment und damit eine hohe Biegesteifigkeit erreicht. Darüber hinaus wird die Masse der Radachse reduziert. Andererseits ist ein biegesteifer Lagerzapfen vorgesehen, auf welchem die Hohlwelle gelagert ist. Der ortsfest angeordnete Lagerzapfen in Verbindung mit der Hohlwelle ergibt eine äußerst biegesteife Radlagerung, welche unter der Einwirkung der bei der Messung auftretenden Reifenkräfte nur geringe Verformungen zulässt. Die Erfindung geht von der Erkenntnis aus, dass ein Grund für die Messfehler in einer relativ niedrigen Eigenfrequenz der Messvorrichtung im Verhältnis zu den Messfrequenzen liegt, welche im Rahmen einer sog. High Speed Uniformity- (HSU-) Messung erwünscht sind. Durch die erfindungsgemäße Radlagerung von Hohlwelle und biegesteifem Lagerzapfen ergibt sich eine hohe Biegesteifigkeit und damit eine relativ hohe Eigenfrequenz des Radkraftdynamometers. Das Auftreten von Resonanzen mit den Messfrequenzen kann daher vermieden werden, da letztere unterhalb der hohen Eigenfrequenzen der Radlagerung liegen. Es ergeben sich optimierte Übertragungsfunktionen, die eine geringere Amplitudenerhöhung und einen geringeren Phasenversatz zeigen.

Nach einer bevorzugten Ausführungsform ist der Lagerzapfen als Hohlzapfen ausgebildet, wodurch sich ein Ringquerschnitt mit hohem Widerstandsmoment und geringer Masse ergibt, was zu höheren Eigenfrequenzen führt. Bevorzugt weist der Hohlzapfen ein radseitiges, äußeres Stirnende, ein inneres Ende und einen tragenden Ringquerschnitt auf, wobei der tragende Ringquerschnitt vom äußeren Stirnende zum inneren Ende zunimmt. Damit ergibt sich an der Einspannstelle des Hohlzapfens im Bereich der stärksten Beanspruchung ein maximaler Querschnitt.

Bevorzugt ist es vorgesehen, dass der Hohlzapfen eine Radialumfangsänderung aufweist, indem der Hohlzapfen sich in einem axial mittleren Bereich kegelartig verjüngt oder dass der der Hohlzapfen sich im axial mittleren Bereich hin kegelartig verstärkt.

Nach einer weiteren bevorzugten Ausführungsform ist die Hohlwelle über hydrostatische Gleitlager gegenüber dem Lagerzapfen gelagert. Bei hydrostatischen Lagern wird der erforderliche Schmierfilm über eine zusätzliche Schmierölpumpe bereitgestellt, welche das Schmieröl unter Druck in den Schmierspalt fördert. Damit ergibt sich für das hydrostatische Gleitlager der Vorteil, dass bereits beim Anlauf, d. h. geringen Drehzahlen eine minimale Reibung auftritt. Ein weiterer Vorteil besteht darin, dass die hydrostatischen Gleitlager gegenüber den herkömmlichen Wälzlagerungen schon bei sehr niedrigen Anregungsfrequenzen eine höhere Steifigkeit aufweisen. Bei höheren, für die Messung der Hochgeschwindigkeitsgleichförmigkeit (HSU) relevanten Frequenzen ist die Steifigkeit sehr viel höher als bei Wälzlagern. Insofern tragen auch die hydrostatischen Gleitlager erheblich dazu bei, das Steifigkeitspotential der Radlagerung weiter auszuschöpfen, d. h. die Eigenfrequenz der Messvorrichtung zu erhöhten.

Nach einer weiteren bevorzugten Ausführungsform weist der Lagerzapfen einen Bund auf, welcher sich an einer ortsfesten Tragstruktur abstützt. Damit ergibt sich das Konzept eines einseitig eingespannten Balkens mit hoher Biegesteifigkeit und hoher Eigenfrequenz.

Nach einer weiteren bevorzugten Ausführungsform sind die Kraftsensoren zwischen dem Bund des Lagerzapfens und der Tragstruktur angeordnet. Auf dem Umfang des Bundes können somit mehrere, zum Teil unterschiedliche Kraftsensoren zur Messung der Reifenkräfte angeordnet werden.

Nach weiteren bevorzugten Ausführungsformen sind die hydrostatischen Gleitlager als Radial- und Axiallager ausgebildet, wobei zwei im Abstand zueinander angeordnete Radiallager bevorzugt sind - auch dies erhöht die Steifigkeit des Lagerkonzepts.

Gemäß einer ebenfalls ganz besonders bevorzugten Ausführungsform der Erfindung ist es vorgesehen, dass ein erstes und ein zweites Gleitlager als Kegellager ausgebildet sind, welche am Lagerzapfen angeordnet sind. Auch dies erhöht die Steifigkeit des Lagerkonzepts bei gleichzeitiger Gewährleistung einer reibungsarmen Drehbarkeit der Hohlwelle gegenüber dem Zapfen, wobei zusätzlich nur eine minimale Anzahl an Gleitlagern, nämlich zwei Gleitlager, benötigt werden.

Bevorzugt ist es vorgesehen, dass ein zweites und ein drittes hydrostatisches Lager als kombiniertes Radial- und Axiallager ausgebildet sind.

Nach einer weiteren bevorzugten Ausführungsform ist ein Axiallager im Inneren des Hohlzapfens angeordnet und über eine Stützwelle mit der Hohlwelle verbunden. Die Stützwelle leitet somit die Axialkräfte von der Hohlwelle in das Axiallager. Damit kann der im Hohlzapfen angeordnete Hohlraum für die Unterbringung des Axiallagers genutzt werden, so dass Bauraum in radialer Richtung eingespart werden kann.

Bevorzugt ist es vorgesehen, dass die Hohlwelle stirnseitig mit einer Tragscheibe verbunden ist.

Nach einer weiteren bevorzugten Ausführungsform ist die Hohlwelle auf ihrer radseitigen Stirnseite fest mit einer Tragscheibe verbunden, welche in erster Linie der Anbindung des Fahrzeugrades, insbesondere deren Felge dient. Darüber hinaus dient die Tragscheibe auch der Anbindung der Stützwelle für das innere Axiallager.

Nach einer weiteren bevorzugten Ausführungsform sind an der Tragscheibe Radflanschadapter angeordnet, welche eine Befestigung von Radfelgen mit unterschiedlichen Felgenabmessungen an der Tragscheibe ermöglichen.

Insbesondere ist zwischen der Tragscheibe und dem Fahrzeugrad ein Radflanschadapter angeordnet.

Nach einer weiteren bevorzugten Ausführungsform sind an der Tragscheibe Zentrierringe angeordnet, welche eine Zentrierung der Felge bzw. des Rades gegenüber der Hohlwelle bewirken.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
Fig. 1 ein erstes Ausführungsbeispiel der Erfindung für eine Radlagerung eines Radkraftdynamometers mittels Hohlwelle und Lagerzapfen,
Fig. 2 ein zweites Ausführungsbeispiel der Erfindung für eine Radlagerung mit einem alternativen Axiallager und
Fig. 3 ein drittes Ausführungsbeispiel der Erfindung für eine Radlagerung mit zwei Kegellagern.

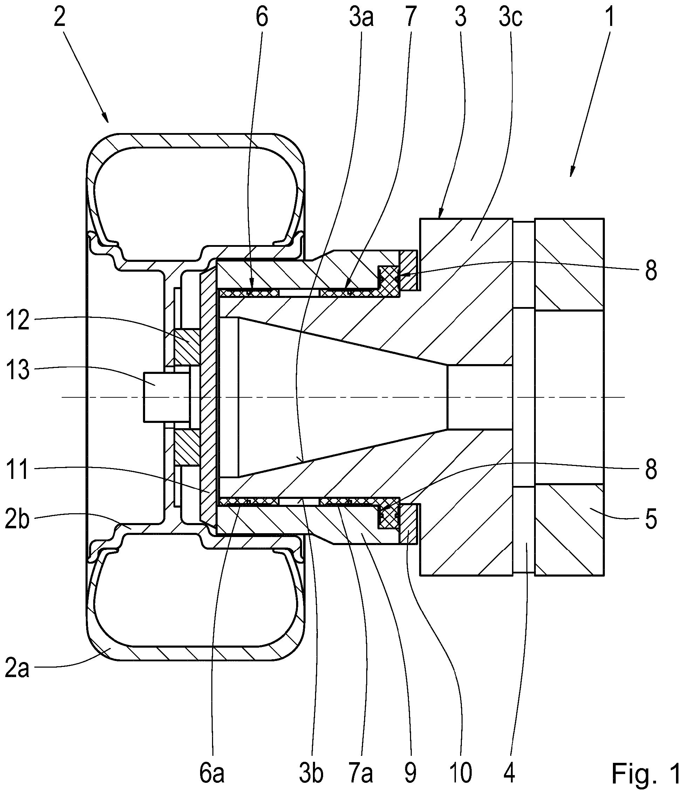

Fig. 1 zeigt als erstes Ausführungsbeispiel der Erfindung ein Radkraftdynamometer 1, d. h. eine Vorrichtung zur Messung von Kräften und Momenten an einem rotierenden Fahrzeugrad 2, im Folgenden auch kurz Rad 2 genannt. Insbesondere geht es um die Messung der Hochgeschwindigkeitsgleichförmigkeit von Reifen und Rädern oder die Messung der High Speed Uniformity (HSU). Das Radkraftdynamometer 1, im Folgenden kurz Messvorrichtung 1 genannt, weist einen biegesteifen Lagerzapfen 3 auf, welcher über Kraftsensoren 4 an einer ortsfesten Tragstruktur 5 abgestützt ist. Der Lagerzapfen 3 ist als Hohlzapfen ausgebildet und weist eine zum Teil konisch, zum Teil zylindrisch ausgebildete Innenfläche 3a auf, so dass sich ein in Richtung der Tragstruktur 5 zunehmender, tragender Ringquerschnitt ergibt. Der Hohlzapfen 3 weist ferner einen im Wesentlichen zylindrisch ausgebildeten Lagersitz 3b sowie einen relativ massiven Bund 3c auf, über welchen der Lagerzapfen 3 abgestützt ist. Auf dem Lagersitz 3b sind ein erstes als Radiallager ausgebildetes hydrostatisches Gleitlager 6, ein zweites als Radiallager ausgebildetes hydrostatisches Gleitlager 7 sowie ein drittes als Axiallager ausgebildetes hydrostatisches Gleitlager 8 angeordnet. Eine Hohlwelle 9 ist über die hydrostatischen Gleitlager 6, 7, 8 gegenüber dem Hohlzapfen 3 radial und axial abgestützt. Das erste und das zweite hydrostatische Gleitlager 6, 7 weisen auf ihrem Außenumfang Schmiertaschen 6a, 7a auf, welche über eine nicht dargestellte Druckölzuführung mit Schmieröl versorgt werden, so dass ein ständiger Schmierfilm zwischen den Radiallagern 6, 7 und der Innenfläche der Hohlwelle 9 aufrecht erhalten wird. Die Hohlwelle 9 weist an ihrer dem Bund 3c zugewandten Stirnseite einen Druckring 10 auf, welcher stirnseitig an der Hohlwelle 9 befestigt ist und sich gegenüber dem Axiallager 8 abstützt. Damit ist die Hohlwelle 9 in axialer Richtung auf dem Lagerzapfen 3 fixiert. Die Verbindung des Fahrzeugrades 2 mit der Hohlwelle 9 erfolgt über eine Tragscheibe 11, welche an der dem Rad 2 zugewandten Stirnseite der Hohlwelle 9 angeordnet und befestigt ist. Das Rad 2 weist einen Reifen 2a auf, der auf einer Radfelge 2b, auch kurz Felge 2b genannt, angeordnet ist. Die Felge 2b ist über einen Radflanschadapter 12 mit der Tragscheibe 11 verbunden. Zusätzlich ist ein Zentrierring 13 vorgesehen, welcher eine Zentrierung des Rades 2 gegenüber der Hohlwelle 9 bewirkt. Die Hohlwelle 9 weist im Bereich des ersten Radiallagers 6 einen maximalen Außendurchmesser auf, der durch den Innendurchmesser der Radfelge 2b begrenzt wird; der innerhalb der Felge 2b vorhandene Bauraum wird somit optimal zugunsten eines maximalen Widerstandsmomentes der Hohlwelle 9 genutzt.

Die Lagerung des Rades 2 gegenüber der ortsfesten Tragstruktur 5 ist als biegesteife Konstruktion konzipiert, damit die Messvorrichtung 1 eine möglichst hohe Eigenfrequenz aufweist. Damit liegt die Messfrequenz, mit der die Kräfte und Momente bei einer HSU-Messung ermittelt werden, im Wesentlichen unterhalb der Eigenfrequenz der Messvorrichtung. Resonanzen zwischen der Eigenfrequenz der Messvorrichtung 1 und den Messfrequenzen können damit weitestgehend vermieden werden, so dass resonanzbedingte Messfehler wie Amplitudenerhöhung oder Phasenverschiebung minimiert werden.

Bei der Messung rollt das Rad 2 auf einer realen oder simulierten, nicht dargestellten Fahrbahn, z. B. einer Lauftrommel ab und ist mit einer definierten Radlast belastet.

Die daraus resultierenden Kräfte und Momente werden über die Radfelge 2b und die Tragscheibe 11 auf die Hohlwelle 9 und von dieser über die hydrostatischen Gleitlager 6, 7, 8 auf den Lagerzapfen 3 übertragen, welcher sich mittels seines Bundes 3c über die Kraftsensoren 4 an der Tragstruktur 5 abstützt.

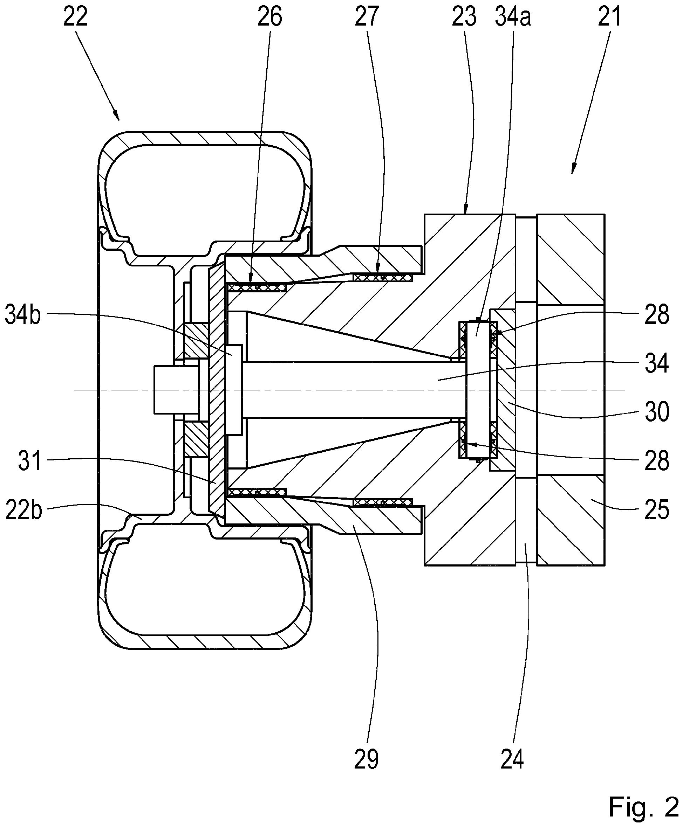

Fig. 2 zeigt ein zweites Ausführungsbeispiel der Erfindung für ein Radkraftdynamometer 21, bei welchem für gleiche oder analoge Teile wie in Fig. 1 gleiche, jedoch um 20 erhöhte Bezugszahlen verwendet werden. Eine Hohlwelle 29 ist über zwei hydrostatische Gleitlager, ausgebildet als erstes Radiallager 26 und zweites Radiallager 27, gegenüber einem als Hohlzapfen ausgebildeten Lagerzapfen 23 gelagert, welcher sich über Kraftsensoren 24 an einer ortsfesten Tragstruktur 25 abstützt. Die freie, radseitige Stirnseite der Hohlwelle 29 ist fest mit einer Tragscheibe 31 verbunden. Der Außendurchmesser der Hohlwelle 29 ist nur unwesentlich kleiner als der Innendurchmesser der Radfelge 22b; insofern wird der gesamte radial zur Verfügung stehende Bauraum zu Gunsten eines maximalen Durchmessers für die Hohlwelle 29 genutzt. Anstelle des in Fig. 1 dargestellten Axiallagers 8 ist beim zweiten Ausführungsbeispiel gemäß Fig. 2 ein alternatives Axiallager 28 im Inneren des Hohlzapfens 23 angeordnet. Eine Stützwelle 34 ist mit einer Lagerscheibe 34a verbunden, welche zwischen den beiden Axiallagern 28 gleitend angeordnet ist. Am anderen Ende weist die Stützwelle 34 einen Bund 34b auf, welcher mit der Tragscheibe 31 und damit mit der Hohlwelle 29 verbunden ist. Axialkräfte, welche auf die Hohlwelle 29 respektive die Tragscheibe 31 wirken, werden über die Stützwelle 34 im Axiallager 28 abgestützt, welches über eine am Lagerzapfen 23 befestigte Druckscheibe 30 axial fixiert ist.

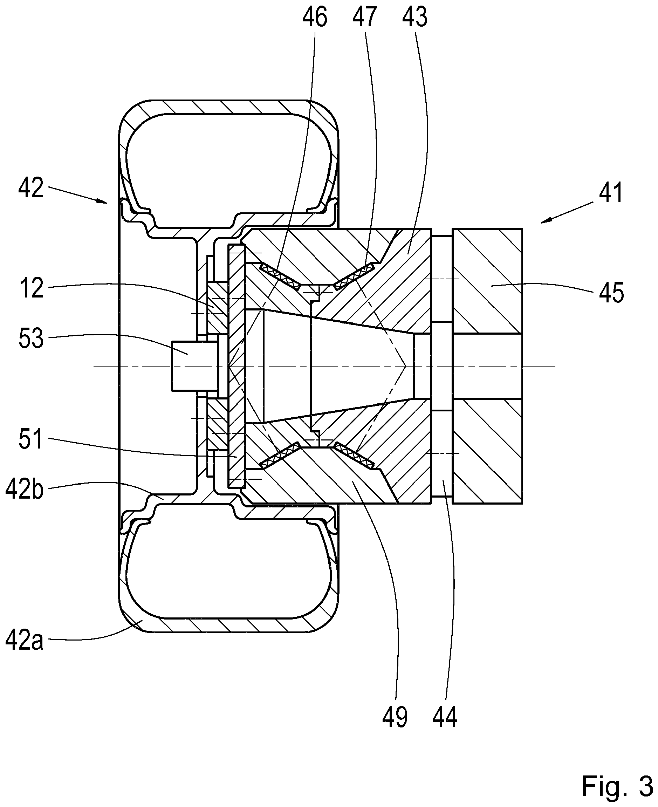

Fig. 3 zeigt ein drittes Ausführungsbeispiel der Erfindung für ein Radkraftdynamometer 41, bei welchem für gleiche oder analoge Teile wie in Fig. 1 gleiche, jedoch um 40 erhöhte Bezugszahlen verwendet werden. Eine Hohlwelle 49 ist über ein erstes und ein zweites hydrostatische Gleitlager 46, 47, ausgebildet als Kegellager 46, 47, gegenüber einem als Hohlzapfen ausgebildeten Lagerzapfen 43 gelagert, welcher sich über Kraftsensoren 44 an einer ortsfesten Tragstruktur 45 abstützt. Die Kegellager46, 47 sind dabei außen am Hohlzapfen angeordnet. Die freie, radseitige Stirnseite der Hohlwelle 49 ist fest mit einer Tragscheibe 51 verbunden. Der Außendurchmesser der Hohlwelle 49 ist nur unwesentlich kleiner als der Innendurchmesser der Radfelge 42b; insofern wird der gesamte radial zur Verfügung stehende Bauraum zu Gunsten eines maximalen Durchmessers für die Hohlwelle 49 genutzt. Wie in der Fig. 3 dargestellt ist, weist der Hohlzapfen 43 im Bereich der Kegellager 46,47 eine Radialumfangsänderung auf, indem der Hohlzapfen 43 sich in einem axial mittleren Bereich kegelartig verjüngt. Durch diese kegelartige Verjüngung wird die Voraussetzung zur Ausbildung der zwei Gleitlager 46, 47 als Kegellager 46, 47 geschaffen. Somit benötigt das in Fig. 3 beispielhaft gezeigte Radkraftdynamometer nur zwei hydrostatische Gleitlager 46, 47, um sämtliche Kräfte und Momente von der Hohlwelle 49 auf den Hohlzapfen 43 zu übertragen. Indem sich der Hohlzapfen in einem axial mittleren Bereich kegelartig verjüngt, weisen die senkrecht auf dem Kegel stehenden Druckwirkungslinien nach außen. Damit bilden die beiden Kegellager eine O-Anordnung, die besonders gut Momente aufnehmen kann.

### Bezugszeichen

- 1: Radkraftdynamometer
- 2: Rad
- 2a: Reifen
- 2b: Felge
- 3: Lagerzapfen
- 3a: Innenfläche
- 3b: Lagersitz
- 3c: Bund
- 4: Kraftsensor
- 5: Tragstruktur
- 6: erstes Gleitlager
- 7: zweites Gleitlager
- 8: drittes Gleitlager
- 9: Hohlwelle
- 10: Druckring
- 11: Tragscheibe
- 12: Radflanschadapter
- 13: Zentrierring

- 21: Radkraftdynamometer
- 22: Rad
- 23: Lagerzapfen
- 24: Kraftsensor
- 25: Tragstruktur
- 26: erstes Gleitlager
- 27: zweites Gleitlager
- 28: drittes Gleitlager
- 29: Hohlwelle
- 30: Druckscheibe
- 31: Tragscheibe
- 34: Stützwelle
- 34a: Lagerscheibe
- 34b: Bund

- 41: Radkraftdynamometer
- 42: Rad
- 42a: Reifen
- 42b: Felge
- 43: Lagerzapfen
- 43c: Bund
- 44: Kraftsensor
- 45: Tragstruktur
- 46: erstes Gleitlager
- 47: zweites Gleitlager
- 49: Hohlwelle
- 51: Tragscheibe
- 53: Zentrierring

## Patentansprüche

1. Radkraftdynamometer zur Messung von Kräften und Momenten, die auf einen Fahrzeugreifen (2a) und ein Fahrzeugrad (2) wirken, mittels Kraftsensoren (4, 24, 44), wobei das Fahrzeugrad (2) drehbar mittels einer Radachse gelagert ist, wobei
die Radachse als Hohlwelle (9, 29, 49) ausgebildet ist, welche auf einem biegesteifen, ortsfest angeordneten Lagerzapfen (3, 23, 43) gelagert ist,
**dadurch gekennzeichnet, dass**
der Lagerzapfen (3, 23, 43) über die Kraftsensoren (4, 24, 44) an einer ortsfesten Tragestruktur (5) abgestützt ist,
wobei die Hohlwelle (9, 29, 49) über hydrostatische Gleitlager (6, 7, 8, 26, 27, 28, 46, 47) gegenüber dem Lagerzapfen (3, 23, 43) gelagert ist,
wobei die Hohlwelle (29) über ein erstes und ein zweites hydrostatisches Gleitlager, ausgebildet als erstes Radiallager (6, 26) und als zweites Radiallager (6, 27), gegenüber einem als Hohlzapfen ausgebildeten Lagerzapfen (3, 23) gelagert ist, welcher sich über Kraftsensoren (24) an der ortsfesten Tragstruktur (25) abstützt und
wobei ein drittes hydrostatisches Gleitlager als Axiallager (8, 28) ausgebildet ist.

2. Radkraftdynamometer nach Anspruch 1, **dadurch gekennzeichnet, dass** der Lagerzapfen als Hohlzapfen (3, 23, 43) ausgebildet ist.

3. Radkraftdynamometer nach Anspruch 2, **dadurch gekennzeichnet, dass** der Hohlzapfen (3, 23, 43) ein radseitiges, äußeres Stirnende, ein inneres Ende und einen tragenden Ringquerschnitt aufweist und dass der tragende Ringquerschnitt vom äußeren Stirnende zum inneren Ende zunimmt.

4. Radkraftdynamometer nach einem der Ansprüche 1 bis 3, **dadurch gekennzeichnet, dass** der Hohlzapfen (3, 23, 43) eine Radialumfangsänderung aufweist, indem der Hohlzapfen (3, 23, 43) sich in einem axial mittleren Bereich kegelartig verjüngt oder dass der der Hohlzapfen (3, 23, 43) sich im axial mittleren Bereich hin kegelartig verstärkt.

5. Radkraftdynamometer nach einem der Ansprüche 1 bis 4, **dadurch gekennzeichnet, dass** der Lagerzapfen (3, 23, 43) einen Bund (3c) aufweist, welcher an einer ortsfesten Tragstruktur (5, 25, 45) abgestützt ist.

6. Radkraftdynamometer nach Anspruch 5, **dadurch gekennzeichnet, dass** die Kraftsensoren (4, 24,44) zwischen dem Bund (3c) und der Tragstruktur (5, 25, 45) angeordnet sind.

7. Radkraftdynamometer nach Anspruch1, **dadurch gekennzeichnet, dass** das zweite und das dritte hydrostatische Lager als kombiniertes Radial- und Axiallager (7, 8) ausgebildet sind.

8. Radkraftdynamometer nach einem der Ansprüche 1, 4 und 5, **dadurch gekennzeichnet, dass** ein erstes und ein zweites hydrostatisches Gleitlager als Kegellager (46, 47) ausgebildet sind, wobei der Hohlzapfen (43) im Bereich der Kegellager (46, 47) die Radialumfangsänderung aufweist, indem der Hohlzapfen (43) sich in dem axial mittleren Bereich kegelartig verjüngt.

9. Radkraftdynamometer nach Anspruch 1, **dadurch gekennzeichnet, dass** das Axiallager (28) im Inneren des Hohlzapfens (23) angeordnet und über eine Stützwelle (34) mit der Hohlwelle (29) verbunden ist.

10. Radkraftdynamometer nach einem der Ansprüche 1 bis 9, **dadurch gekennzeichnet, dass** die Hohlwelle (9, 29) stirnseitig mit einer Tragscheibe (11, 31) verbunden ist.

11. Radkraftdynamometer nach Anspruch 10, **dadurch gekennzeichnet, dass** die Tragscheibe (11, 31) mit dem Fahrzeugrad (2, 22) verbindbar ist.

12. Radkraftdynamometer nach Anspruch 11, **dadurch gekennzeichnet, dass** zwischen der Tragscheibe (11, 31) und dem Fahrzeugrad (2, 22) ein Radflanschadapter (12) angeordnet ist.

13. Radkraftdynamometer nach einem der Ansprüche 9 bis 12, **dadurch gekennzeichnet, dass** die Stützwelle (34) über die Tragscheibe (31) mit der Hohlwelle (29) verbunden ist.

14. Radkraftdynamometer nach einem der Ansprüche 10 bis 13, **dadurch gekennzeichnet, dass** an der Tragscheibe (11) ein Zentrierring (13) angeordnet ist.

## Claims

1. Wheel-force dynamometer for measuring forces and torques which act on a vehicle tyre (2a) and a vehicle wheel (2), by means of force sensors (4, 24, 44), the vehicle wheel (2) being mounted rotatably by means of a wheel axle, the wheel axle being configured as a hollow shaft (9, 29, 49) which is mounted on a flexurally stiff bearing journal (3, 23, 43) which is arranged in a stationary manner, **characterized in that** the bearing journal (3, 23, 43) is supported via the force sensors (4, 24, 44) on a stationary load-bearing structure (5), the hollow shaft (9, 29, 49) being mounted with respect to the bearing journal (3, 23, 43) via hydrostatic plain bearings (6, 7, 8, 26, 27, 28, 46, 47), the hollow shaft (29) being mounted with respect to a bearing journal (3, 23), which is configured as a hollow journal, via a first and a second hydrostatic plain bearing, configured as a first radial bearing (6, 26) and as a second radial bearing (6, 27), which bearing journal (3, 23) is supported via force sensors (24) on the stationary load-bearing structure (25), and a third hydrostatic plain bearing being configured as an axial bearing (8, 28).

2. Wheel-force dynamometer according to Claim 1, **characterized in that** the bearing journal is configured as a hollow journal (3, 23, 43).

3. Wheel-force dynamometer according to Claim 2, **characterized in that** the hollow journal (3, 23, 43) has a wheel-side, outer front end, an inner end and a load-bearing annular cross section, and **in that** the load-bearing annular cross section increases from the outer front end towards the inner end.

4. Wheel-force dynamometer according to one of Claims 1 to 3, **characterized in that** the hollow journal (3, 23, 43) has a radial circumference change, by the hollow journal (3, 23, 43) tapering conically in an axially middle region, or **in that** the hollow journal (3, 23, 43) grows conically in the axial middle region.

5. Wheel-force dynamometer according to one of Claims 1 to 4, **characterized in that** the bearing journal (3, 23, 43) has a collar (3c) which is supported on a stationary load-bearing structure (5, 25, 45).

6. Wheel-force dynamometer according to Claim 5, **characterized in that** the force sensors (4, 24, 44) are arranged between the collar (3c) and the load-bearing structure (5, 25, 45).

7. Wheel-force dynamometer according to Claim 1, **characterized in that** the second and the third hydrostatic bearing are configured as a combined radial and axial bearing (7, 8).

8. Wheel-force dynamometer according to one of Claims 1, 4 and 5, **characterized in that** a first and a second hydrostatic plain bearing are configured as a taper bearing (46, 47), the hollow journal (43) having the radial circumference change in the region of the taper bearings (46, 47), by the hollow journal (43) tapering conically in the axial middle region.

9. Wheel-force dynamometer according to Claim 1, **characterized in that** the axial bearing (28) is arranged in the interior of the hollow journal (23) and is connected to the hollow shaft (29) via a supporting shaft (34) .

10. Wheel-force dynamometer according to one of Claims 1 to 9, **characterized in that** the hollow shaft (9, 29) is connected on the end side to a support disc (11, 31).

11. Wheel-force dynamometer according to Claim 10, **characterized in that** the support disc (11, 31) can be connected to the vehicle wheel (2, 22).

12. Wheel-force dynamometer according to Claim 11, **characterized in that** a wheel flange adapter (12) is arranged between the support disc (11, 31) and the vehicle wheel (2, 22).

13. Wheel-force dynamometer according to one of Claims 9 to 12, **characterized in that** the supporting shaft (34) is connected to the hollow shaft (29) via the support disc (31).

14. Wheel-force dynamometer according to one of Claims 10 to 13, **characterized in that** a centring ring (13) is arranged on the support disc (11).

## Revendications

1. Dynamomètre de force de roue pour la mesure de forces et de moments qui agissent sur un pneu de véhicule (2a) et une roue de véhicule (2), au moyen de capteurs de force (4, 24, 44), la roue de véhicule (2) étant montée de manière rotative au moyen d'un essieu de roue, l'essieu de roue étant configuré sous forme d'arbre creux (9, 29, 49), qui est monté sur un tourillon (3, 23, 43) rigide en flexion, agencé de manière fixe,
**caractérisé en ce que**
le tourillon (3, 23, 43) s'appuie par l'intermédiaire des capteurs de force (4, 24, 44) sur une structure porteuse fixe (5),
l'arbre creux (9, 29, 49) étant monté par l'intermédiaire de paliers lisses hydrostatiques (6, 7, 8, 26, 27, 28, 46, 47) par rapport au tourillon (3, 23, 43),
l'arbre creux (29) étant monté par l'intermédiaire d'un premier et d'un deuxième palier lisse hydrostatique, configurés sous forme de premier palier radial (6, 26) et sous forme de deuxième palier radial (6, 27), par rapport à un tourillon (3, 23) configuré sous forme de tourillon creux, qui s'appuie sur la structure porteuse fixe (25) par l'intermédiaire de capteurs de force (24), et
un troisième palier lisse hydrostatique étant configuré sous forme de palier axial (8, 28).

2. Dynamomètre de force de roue selon la revendication 1, **caractérisé en ce que** le tourillon est configuré sous forme de tourillon creux (3, 23, 43).

3. Dynamomètre de force de roue selon la revendication 2, **caractérisé en ce que** le tourillon creux (3, 23, 43) présente une extrémité frontale extérieure du côté de la roue, une extrémité intérieure et une section transversale annulaire portante et **en ce que** la section transversale annulaire portante augmente de l'extrémité frontale extérieure vers l'extrémité intérieure.

4. Dynamomètre de force de roue selon l'une quelconque des revendications 1 à 3, **caractérisé en ce que** le tourillon creux (3, 23, 43) présente une modification de circonférence radiale, par le fait que le tourillon creux (3, 23, 43) se rétrécit en forme de cône dans une zone centrale axiale, ou **en ce que** le tourillon creux (3, 23, 43) s'agrandit en forme de cône dans la zone centrale axiale.

5. Dynamomètre de force de roue selon l'une quelconque des revendications 1 à 4, **caractérisé en ce que** le tourillon (3, 23, 43) présente un collet (3c) qui s'appuie sur une structure porteuse fixe (5, 25, 45).

6. Dynamomètre de force de roue selon la revendication 5, **caractérisé en ce que** les capteurs de force (4, 24, 44) sont agencés entre le collet (3c) et la structure porteuse (5, 25, 45).

7. Dynamomètre de force de roue selon la revendication 1, **caractérisé en ce que** le deuxième et le troisième palier hydrostatique sont configurés sous forme de paliers radiaux et axiaux combinés (7, 8).

8. Dynamomètre de force de roue selon l'une quelconque des revendications 1, 4 et 5, **caractérisé en ce qu'**un premier et un deuxième palier lisse hydrostatique sont configurés sous forme de paliers coniques (46, 47), le tourillon creux (43) présentant la modification de circonférence radiale dans la zone des paliers coniques (46, 47), par le fait que le tourillon creux (43) se rétrécit en forme de cône dans la zone centrale axiale.

9. Dynamomètre de force de roue selon la revendication 1, **caractérisé en ce que** le palier axial (28) est agencé à l'intérieur du tourillon creux (23) et est relié à l'arbre creux (29) par l'intermédiaire d'un arbre de support (34).

10. Dynamomètre de force de roue selon l'une quelconque des revendications 1 à 9, **caractérisé en ce que** l'arbre creux (9, 29) est relié frontalement à un disque porteur (11, 31).

11. Dynamomètre de force de roue selon la revendication 10, **caractérisé en ce que** le disque porteur (11, 31) peut être relié à la roue de véhicule (2, 22).

12. Dynamomètre de force de roue selon la revendication 11, **caractérisé en ce qu'**un adaptateur de bride de roue (12) est agencé entre le disque porteur (11, 31) et la roue de véhicule (2, 22).

13. Dynamomètre de force de roue selon l'une quelconque des revendications 9 à 12, **caractérisé en ce que** l'arbre de support (34) est relié à l'arbre creux (29) par l'intermédiaire du disque porteur (31).

14. Dynamomètre de force de roue selon l'une quelconque des revendications 10 à 13, **caractérisé en ce qu'**une bague de centrage (13) est agencée sur le disque porteur (11).
